# EUROPÄISCHE PATENTSCHRIFT

(11) **EP 2 982 470 B1**
(45) Veröffentlichungstag und Bekanntmachung des Hinweises auf die Patenterteilung: **12.04.2017**
(21) Anmeldenummer: 15175069.2
(22) Anmeldetag: 02.07.2015
(51) Int. Cl.: B23P 15/00, F01D 5/02, B23P 13/02, F02B 37/00, F01D 5/06

(54) **VERFAHREN ZUR HERSTELLUNG EINES ROTORS EINER LADEEINRICHTUNG**
METHOD FOR PRODUCING A ROTOR OF A CHARGING APPARATUS
PROCÉDÉ DE FABRICATION D'UN ROTOR D'UN DISPOSITIF DE CHARGEMENT

(30) Priorität: 05.08.2014 DE 102014215441
(43) Veröffentlichungstag der Anmeldung: 10.02.2016
(73) Patentinhaber: Bosch Mahle Turbo Systems GmbH & Co. KG, 70376 Stuttgart (DE)
(72) Erfinder: KLUSÁCEK, Michal, 161 00 Praha 6 (CZ)
(74) Vertreter: BRP Renaud & Partner mbB Rechtsanwälte Patentanwälte Steuerberater

(56) Entgegenhaltungen:
- WO-A1-2014/016016
- DE-A1-102008 062 553
- DE-A1-102009 014 005
- DE-A1-102012 002 284
- DE-A1-102012 202 272

## Beschreibung

Verfahren zur Herstellung eines Rotors einer Ladeeinrichtung Die vorliegende Erfindung betrifft ein Verfahren zur Herstellung eines Rotors einer Ladeeinrichtung, insbesondere eines Abgasturboladers, mit einem Verdichterrad und einem Turbinenrad gemäß dem Oberbegriff des Anspruchs 1.

Rotoren für Abgasturbolader bzw. für Ladeeinrichtungen allgemein sind üblicherweise aus mehreren Teilen zusammengesetzt, beispielsweise einem Turbinenrad, einer Welle und einem Verdichterrad. Die einzelnen Teile sind dabei separat mit rotationssymmetrischen Endkonturen gefertigt. Nach der Fertigung werden die vorgewuchteten einzelnen Teile, beispielsweise das Verdichterrad und das Turbinenrad, zu dem Rotor montiert. Nach der Endmontage wird der Rotor nochmals gewuchtet.

Aus der DE 10 2009 014 005 A1 ist eine rotierende Strömungsmaschine mit einem ein Verdichterrad und/oder ein Turbinenrad aufweisenden Rotor bekannt, der um eine Rotationsachse drehbar gelagert ist, und mit einem scheibenförmigen Hitzeschutzschild, das bezüglich der Rotationsachse axial zwischen zwei Komponenten der Strömungsmaschine angeordnet ist, die im Betrieb der Strömungsmaschine verschiedene Temperaturen aufweisen. Das Hitzeschutzschild ist dabei mit dem Rotor drehfest verbunden.

Aus der DE 10 2012 202 272 A1 ist ein Rotor einer Ladeeinrichtung, insbesondere eines Abgasturboladers, mit zumindest zwei aneinander befestigten Teilen bekannt, die zusammen einen Hohlraum einschließen. Die beiden Teile sind dabei über einen in dem Hohlraum herrschenden Unterdruck, insbesondere ein Vakuum, aneinander befestigt.

Aus der DE 10 2008 062 553 A1 ist ein Rotor für eine Ladevorrichtung, insbesondere für einen Abgasturbolader, bekannt. Eine vereinfachte Herstellung soll sich daraus ergeben, dass eine ein Turbinenrad, ein Verdichterrad und eine Welle aufweisende Rotoreinheit integral aus einem Stück hergestellt ist. Die DE 10 2008 062 553 A1 offenbart die Merkmale des Oberbegriffs des Anspruchs 1. Nachteilig bei dem bekannten Fertigungsverfahren ist jedoch, dass hierbei die einzelnen Rotorteile separat gewuchtet werden müssen und nach der Montage trotz allem keine exakt rotationssymmetrischen Oberflächen am Rotor vorliegen.

Die vorliegende Erfindung beschäftigt sich daher mit dem Problem, für ein Verfahren der gattungsgemäßen Art eine verbesserte oder zumindest alternative Ausführungsform anzugeben, mittels welcher eine vergleichsweise einfache und dennoch hochpräzise Herstellung eines gewuchteten Rotors mit rotationssymmetrischen Oberflächen möglich ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einzelne Teile eines Rotors, beispielsweise ein Turbinenrad und ein Verdichterrad oder Lagerabschnitte, mit radialem Übermaß zu fertigen, anschließend zu einem Rotor zusammenzubauen und diesen in fertig montiertem Zustand zu bearbeiten, beispielsweise zu drehen oder zu schleifen, bis er rotationssymmetrisch ist. Die Vorteile bei dem erfindungsgemäßen Verfahren liegen dabei insbesondere darin, dass die einzelnen Rotorteile, das heißt beispielsweise das Verdichterrad oder das Turbinenrad oder die Lagerabschnitte, nicht separat gewuchtet werden müssen und zudem alle wichtigen Oberflächen aus einer Spannung, das heißt in einem eingespannten Arbeitsschritt, gefertigt werden, wodurch eine maximale Konzentrizität bei gleichzeitig minimalen Kosten gewährleistet werden kann.

Bei einer vorteilhaften Weiterbildung des erfindungsgemäßen Verfahrens wird das Turbinenrad über eine Labyrinthdichtung mit dem Verdichterrad verbunden, wobei längsendseitig jeweils noch ein Lagerabschnitt zum Lagern des Rotors in einem Lagergehäuse der Ladeeinrichtung vorgesehen wird. Anschließend wird der aus Lagerabschnitten, Turbinenrad, Labyrinthdichtung und Verdichterrad fertig zusammengebaute Rotor bearbeitet, insbesondere gedreht oder geschliffen, beispielsweise in einer Drehbank oder spitzenlos, bis er rotationssymmetrisch ist. Hierdurch ist nicht nur die rotationssymmetrische Bearbeitung des Turbinenrades und des Verdichterrades möglich, sondern zugleich auch der Labyrinthdichtung bzw. der beiden Lagerabschnitte.

Zweckmäßig sind zumindest zwei Bauteile des Rotors, beispielsweise das Verdichterrad, das Turbinenrad, ein Lagerabschnitt oder die Labyrinthdichtung miteinander verschweißt, verlötet, verschraubt oder verklebt. Bereits diese nicht abschließende Aufzählung lässt erahnen, welch mannigfaltige Möglichkeiten der Verbindung der einzelnen Teile des Rotors möglich sind, so dass diese beispielsweise kraftschlüssig, formschlüssig und/oder stoffschlüssig miteinander verbunden werden können.
Bei einer weiteren vorteilhaften Ausführungsform der erfindungsgemäßen Lösung werden die axialen Stirnflächen der Lagerabschnitte mittels Erodierverfahren oder mittels Schleifverfahren bearbeitet. Eine Drehbearbeitung des Rotors kann dabei insbesondere auf den axialen Stirnseiten der Lagerabschnitte nur bis nahe an eine Zentrierbohrung durchgeführt werden, da der Rotor im Bereich der Zentrierbohrung in eine Spindel der Drehbank eingespannt und dadurch dort nicht bearbeitet werden kann. Der nicht bearbeitbare Bereich der Zentrierung kann somit nicht "aus einer Spannung" bearbeitet werden, und wird deshalb nach Entfernen des Rotors aus der Drehbank wegerodiert bzw. nachgeschliffen. Somit lassen sich mit dem erfindungsgemäßen Verfahren bis auf die Zentrierbohrungen alle Oberflächenbereiche des Rotors bearbeiten, wodurch dieser hinsichtlich seiner Rotationssymmetrie optimal hergestellt werden kann, was sich selbstverständlich auch positiv auf eine unter Umständen vorhandene Unwucht auswirkt. Auch die Montage des Rotors in die Ladeeinrichtung wird hierdurch vereinfacht.
Bei einer weiteren vorteilhaften Ausführungsform der erfindungsgemäßen Lösung wird in die axialen Stirnflächen ein Axialluftlager geätzt oder erodiert. Ein derartiges Luftlager bietet eine besonders reibungsarme und zugleich verschleißfreie Lagerung, wobei die hierfür erforderlichen Luftleitrillen kostengünstig, aber dennoch hochpräzise mittels Ätz- oder Erodierverfahren oder aber auch eines Laserverfahrens hergestellt werden können.

Weitere Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäß hergestellten Rotor in einer Seitenansicht,
- Fig. 2: eine Stirnansicht auf einen Lagerabschnitt des Rotors mit einem Axialluftlager.

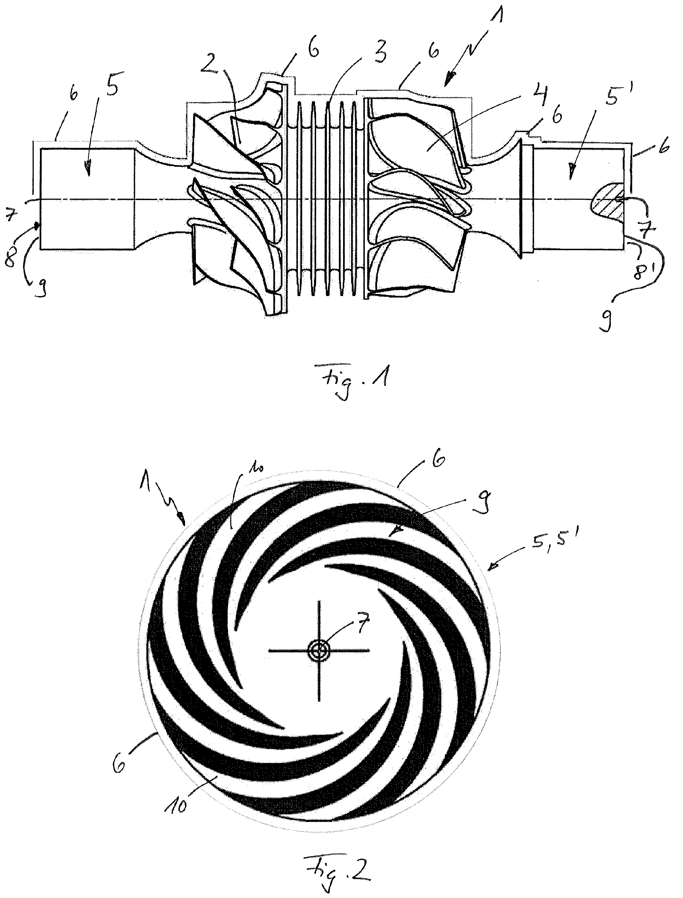

Entsprechend der Figur 1 ist ein erfindungsgemäß hergestellter Rotor 1 einer im Übrigen nicht gezeigten Ladeeinrichtung dargestellt, mit einem Verdichterrad 2, einer Labyrinthdichtung 3 sowie einem Turbinenrad 4. Jeweils längsendseitig am Verdichterrad 2 bzw. im Turbinenrad 4 ist darüber hinaus noch ein Lagerabschnitt mit Radiallageroberflächen 5 bzw. 5' angeordnet. Die einzelnen Bauteile des Rotors 1, das heißt beispielsweise das Turbinenrad 2, die Labyrinthdichtung 3, das Verdichterrad 4 sowie die Lagerabschnitte können dabei kraftschlüssig, stoffschlüssig oder formschlüssig miteinander verbunden sein, insbesondere miteinander verklebt, verschraubt, verschweißt oder verlötet.
Neben den außenliegenden Radiallagerflächen 5, 5', welche vorzugsweise als Radialluftlager ausgebildet sind und die Radiallagerung des Rotors 1 übernehmen, kann im Bereich der Lagerabschnitte auch ein Axialluftlager angeordnet sein, so dass der gesamte Rotor 1 vorzugsweise sowohl in Radialrichtung als auch in Axialrichtung luftgelagert wird.

Erfindungsgemäß wird nun der Rotor 1 dadurch hergestellt, dass zumindest die Radiallagerflächen 5, 5' mit radialem Übermaß gefertigt und anschließend mit dem Verdichterrad 2 und mit dem Turbinenrad 4 zu dem Rotor 1 miteinander verbunden werden. Vorzugsweise sind das Verdichterrad 2 und das Turbinenrad 4 und die Labyrinthdichtung 3 ebenfalls mit radialem Übermaß gefertigt. Dabei kann selbstverständlich anstelle der Labyrinthdichtung 3 auch eine Welle vorgesehen sein, die das Verdichterrad 2 mit dem Turbinenrad 4 verbindet. Anschließend wird der fertig zusammengebaute Rotor 1 in eine Drehbank eingespannt und bearbeitet, insbesondere gedreht oder geschliffen, bis er rotationssymmetrisch ist. Der Begriff "Drehbank" soll dabei als Platzhalter für eine Bearbeitungsmaschine stehen, die selbstverständlich nicht nur ein Drehen, sondern auch ein Schleifen oder anderweitiges Bearbeiten der Oberflächen des Rotors 1 im Hinblick auf eine optimierte Rotationssymmetrie ermöglicht.

Insbesondere kann anstelle des Einspannens in eine Drehbank auch ein spitzenloses Bearbeiten erfolgen. Hierbei wird das Werkstück nicht zwischen Spindelstock und Reitstock eingespannt, sondern zwischen Schleif- und Regelscheibe geführt und dabei von unten mittels einer Schiene gehalten. Man unterscheidet Einstechschleifen und Durchlaufschleifen. Bei letzterer Methode können sehr hohe Durchsätze erzielt werden. Eine spezielle Version sind spitzenlose Schuhschleifmaschinen, bei denen Auflageschiene und Regelscheibe durch Stahlschuhe ersetzt sind. Damit lassen sich spezielle Geometrien in einem Arbeitsgang schleifen.

Bei der gemäß der Figur 1 gezeigten Darstellung des Rotors 1 werden selbstverständlich sämtliche Bauteile des Rotors 1, das heißt also der Lagerabschnitt mit der Radiallagerfläche 5, das Verdichterrad 2, die Labyrinthdichtung 3, das Turbinenrad 4 sowie der Lagerabschnitt mit Radiallagerfläche 5' zuerst miteinander zu dem Rotor 1 verbunden und dieser anschließend in fertig montiertem Zustand, insbesondere in die Drehbank eingespannt und dort, nachbearbeitet. Mit der Nachbearbeitung in "einer Spannung" erreicht man eine optimale Konzentrizität von allen Oberflächen der einzelnen Bauteile des Rotors 1, was die Unwucht reduziert und die Montage des Rotors 1 in der Ladeeinrichtung vereinfacht. Alternativ kann anstelle des Einspannens in eine Drehbank auch ein spitzenloses Bearbeiten erfolgen, wobei das das Werkstück nicht zwischen Spindelstock und Reitstock eingespannt, sondern zwischen Schleif- und Regelscheibe geführt und von unten mittels einer Schiene gehalten wird. Die möglichen Oberflächen des Rotors 1, die bei dem erfindungsgemäßen Verfahren nachbearbeitet werden, sind dabei in Figur 1 mit der Linie 6 bezeichnet. Es ist somit möglich, den nahezu gesamten Rotor 1 mit Ausnahme eines kleinen Bereichs im Bereich der Zentrierbohrungen 7 nachzuarbeiten und dabei hinsichtlich der Rotationssymmetrie zu optimieren. Es wäre aber auch denkbar, ausschließlich die außenliegenden Radiallagerflächen 5, 5' des Rotors 1 in einer Spannung zu bearbeiten.

Die Bereiche um die Zentrierbohrungen 7 können in der Drehbank nicht bearbeitet werden, so dass diese Bereiche nach dem Ausspannen des Rotors 1 weg geschliffen oder weg erodiert werden. Die Vorderkanten der Verdichterradschaufeln und die Hinterkanten der Turbinenradschaufeln werden ebenfalls nicht in einer Spannung bearbeitet.

Die Lagerabschnitte dienen dabei der Radiallagerung des Rotors 1 in einem Lagergehäuse der Ladeeinrichtung, wobei nach dem Bearbeiten des Rotors 1 in der Drehbank die axialen Stirnflächen 8, 8' eines Axialluftlagers 9 (vergleiche Figur 2) durch Laserstrukturierung bearbeitet werden. Selbstverständlich können dabei die einzelnen das Axialluftlager 9 bildende spiralförmig angeordnete Rillen 10 anderweitig hergestellt werden, beispielsweise mittels Ätzen oder Erodieren oder mittels spanabhebendem Verfahren.

Mit dem erfindungsgemäßen Verfahren ist es somit möglich, die einzelnen Rotorteile, beispielsweise die Lagerabschnitte, das Verdichterrad 2, die Labyrinthdichtung 3 und das Turbinenrad 4 nicht mehr separat wuchten zu müssen, wodurch die Herstellungskosten deutlich reduziert werden können. Darüber hinaus können mit dem erfindungsgemäßen Verfahren alle wichtigen Oberflächen aus "einer Spannung" gefertigt werden, wodurch eine maximale Konzentrizität und eine maximale Rotationssymmetrie bei gleichzeitig minimalen Kosten erreicht werden können.

## Patentansprüche

1. Verfahren zur Herstellung eines Rotors (1) einer Ladeeinrichtung, insbesondere eines Abgasturboladers, mit zumindest einem Verdichterrad (2) und einem Turbinenrad (4) wobei längsendseitig jeweils noch ein Lagerabschnitt mit einer Radiallagerfläche (5, 5') zum Lagern des Rotors (1) in einem Lagergehäuse vorgesehen ist,
**dadurch gekennzeichnet,**
- **dass** zumindest die Radiallagerflächen (5, 5') mit radialem Übermaß gefertigt werden,
- **dass** das Verdichterrad (2) und das Turbinenrad (4) und die Lagerabschnitte zum Rotor (1) zusammengebaut werden,
- **dass** zumindest die Radiallagerflächen (5, 5') des fertig zusammengebauten Rotors (1) anschließend bearbeitet, insbesondere gedreht oder geschliffen wird, bis die Radiallagerflächen (5, 5') rotationssymmetrisch sind.

2. Verfahren nach Anspruch 1,
**dadurch gekennzeichnet,**
- **dass** das Turbinenrad (4) über eine Labyrinthdichtung (3) mit dem Verdichterrad (2) verbunden wird,
- **dass** der aus Lagerabschnitten, Turbinenrad (4), Labyrinthdichtung (3) und Verdichterrad (2) fertig zusammengebaute Rotor (1) anschließend bearbeitet, insbesondere gedreht oder geschliffen wird, bis er rotationssymmetrisch ist.

3. Verfahren nach Anspruch 1 oder 2,
**dadurch gekennzeichnet,**
**dass** zumindest zwei Bauteile des Rotors (1), insbesondere das Verdichterrad (2), die Labyrinthdichtung (3) und/oder das Turbinenrad (4) miteinander verschweißt, verlötet oder verklebt oder verschraubt werden.

4. Verfahren nach einem der Ansprüche 1 bis 3,
**dadurch gekennzeichnet,**
- **dass** axiale Stirnflächen (8,8') der Lagerabschnitte mit radialem Übermaß mittels gefertigt werden,
- **dass** das Verdichterrad (2) und das Turbinenrad (4) und die Lagerabschnitte zum Rotor (1) zusammengebaut werden,
- **dass** zumindest die Radiallagerflächen (5, 5') und Stirnflächen (8, 8') des fertig zusammengebauten Rotors (1) anschließend bearbeitet, insbesondere gedreht oder geschliffen werden, bis die Radiallagerflächen (5, 5') rotationssymmetrisch und die Stirnflächen (8, 8') senkrecht zu den Radiallagerflächen (5,5') sind.

5. Verfahren nach Anspruch 4,
**dadurch gekennzeichnet,**
**dass** in die axialen Stirnflächen (8,8') ein Axialluftlager (9) geätzt oder erodiert oder durch Laserstrukturierung bearbeitet wird.

6. Verfahren nach Anspruch 5,
**dadurch gekennzeichnet,**
**dass** der Rotor (1) nach dem Einbringen des Axialluftlagers (9) gewuchtet wird.

7. Verfahren nach einem der Ansprüche 1 bis 6,
**dadurch gekennzeichnet**,
zumindest die Radiallagerflächen (5, 5') und Stirnflächen (8, 8') des fertig gebauten Rotors (1) in einer Drehbank oder spitzenlos bearbeitet, insbesondere gedreht oder geschliffen werden, bis die Radiallagerflächen (5, 5') rotationssymmetrisch und die Stirnflächen (8, 8') senkrecht zu den Radiallagerflächen (5,5') sind.

## Claims

1. A method for producing a rotor (1) of a charging apparatus, particularly an exhaust gas turbocharger, with at least one compressor wheel (2) and a turbine wheel (4), wherein another bearing section with a radial bearing surface (5, 5') for mounting the rotor (1) in a bearing housing is provided in each case at the longitudinal end,
**characterised**
- **in that** at least the radial bearing surfaces (5, 5') are assembled with radial oversizing,
- **in that** the compressor wheel (2) and the turbine wheel (4) and the bearing sections are assembled to form the rotor (1),
- **in that** at least the radial bearing surfaces (5, 5') of the fully assembled rotor (1) are subsequently machined, particularly turned or ground until the radial bearing surfaces (5, 5') are rotationally symmetrical.

2. The method according to Claim 1,
**characterised**
- **in that** the turbine wheel (4) is connected to the compressor wheel (2) via a labyrinth seal (3),
- **in that** the fully assembled rotor (1) made up of bearing sections, turbine wheel (4), labyrinth seal (3) and compressor wheel (2) is subsequently machined, particularly turned or ground, until it is rotationally symmetrical.

3. The method according to Claim 1 or 2,
**characterised**
**in that** at least two components of the rotor (1), in particular the compressor wheel (2), the labyrinth seal (3) and/or the turbine wheel (4) are welded, soldered, adhesively bonded or screwed to one another.

4. The method according to one of Claims 1 to 3,
**characterised**
- **in that** axial end faces (8, 8') of the bearing sections are assembled with radial oversizing,
- **in that** the compressor wheel (2) and the turbine wheel (4) and the bearing sections are assembled to form the rotor (1),
- **in that** at least the radial bearing surfaces (5, 5') and end faces (8, 8') of the fully assembled rotor (1) are subsequently machined, particularly turned or ground, until the radial bearing surfaces (5, 5') are rotationally symmetrical and the end faces (8, 8') are perpendicular to the radial bearing surfaces (5, 5').

5. The method according to Claim 4,
**characterised**
**in that** an axial air bearing (9) is etched or eroded into the axial end faces (8, 8') or machined by means of laser structuring.

6. The method according to Claim 5,
**characterised**
**in that** the rotor (1) is balanced after the introduction of the axial air bearing (9).

7. The method according to one of Claims 1 to 6,
**characterised**
**in that** at least the radial bearing surfaces (5, 5') and end faces (8, 8') of the fully assembled rotor (1) are machined, particularly turned or ground, in a lathe or in a centreless manner until the radial bearing surfaces (5, 5') are rotationally symmetrical and the end faces (8, 8') are perpendicular to the radial bearing surfaces (5, 5').

## Revendications

1. Procédé de fabrication d'un rotor (1) d'un dispositif de chargement, en particulier d'un turbocompresseur de gaz d'échappement, avec au moins une roue de compresseur (2) et une roue de turbine (4), dans lequel respectivement encore une section de palier avec une surface de palier radial (5, 5') est prévue du côté de l'extrémité longitudinale afin de loger le rotor (1) dans un boîtier de palier,
**caractérisé en ce**
- **qu'**au moins les surfaces de palier radial (5, 5') sont confectionnées avec une surdimension radiale,
- **que** la roue de compresseur (2) et la roue de turbine (4) et les sections de palier sont assemblées pour former le rotor (1),
- **qu'**au moins les surfaces de palier radial (5, 5') du rotor (1) prêt à l'emploi assemblé sont ensuite usinées, en particulier sont tournées ou rectifiées jusqu'à ce que les surfaces de palier radial (5, 5') soient symétriques en rotation.

2. Procédé selon la revendication 1,
**caractérisé en ce**
- **que** la roue de turbine (4) est reliée, par l'intermédiaire d'un joint à labyrinthe (3), à la roue de compresseur (2),
- **que** le rotor (1) prêt à l'emploi assemblé à partir des sections de palier, de la roue de turbine (4), du joint à labyrinthe (3) et de la roue de compresseur (2) est ensuite usiné, en particulier est tourné ou rectifié jusqu'à ce qu'il soit symétrique en rotation.

3. Procédé selon la revendication 1 ou 2,
**caractérisé en ce**
**qu'**au moins deux composants du rotor (1), en particulier la roue de compresseur (2), le joint à labyrinthe (3) et/ou la roue de turbine (4), sont assemblés les uns aux autres par soudage, par brasage, ou par collage ou par vissage.

4. Procédé selon l'une quelconque des revendications 1 à 3,
**caractérisé en ce**
- **que** des surfaces frontales (8, 8') axiales des sections de palier sont confectionnées avec une surdimension radiale,
- **que** la roue de compresseur (2) et la roue de turbine (4) et les sections de palier sont assemblées pour former le rotor (1),
- **qu'**au moins les surfaces de palier radial (5, 5') et les surfaces frontales (8, 8') du rotor (1) prêt à l'emploi assemblé sont ensuite usinées, en particulier sont tournées ou sont rectifiées jusqu'à ce que les surfaces de palier radial (5, 5') soient symétriques en rotation et que les surfaces frontales (8, 8') soient perpendiculaires par rapport aux surfaces de palier radial (5, 5').

5. Procédé selon la revendication 4,
**caractérisé en ce**
**qu'**un palier à air axial (9) est gravé ou érodé ou est usiné par une structuration par laser dans les surfaces frontales (8, 8') axiales.

6. Procédé selon la revendication 5,
**caractérisé en ce**
**que** le rotor (1) est équilibré après l'introduction du palier à air axial (9).

7. Procédé selon l'une quelconque des revendications 1 à 6,
**caractérisé en ce**
**qu'**au moins les surfaces de palier radial (5, 5') ou les surfaces frontales (8, 8') du rotor (1) prêt à l'emploi assemblé sont usinées dans un tour ou sans pointe, en particulier sont tournées ou sont rectifiées jusqu'à ce que les surfaces de palier radial (5, 5') soient symétriques en rotation et que les surfaces frontales (8, 8') soient perpendiculaires par rapport aux surfaces de palier radial (5, 5').
